# EUROPÄISCHE PATENTSCHRIFT

(11) **EP 3 416 017 B1**
(45) Veröffentlichungstag und Bekanntmachung des Hinweises auf die Patenterteilung: **04.11.2020**
(21) Anmeldenummer: 18176738.5
(22) Anmeldetag: 08.06.2018
(51) Int. Cl.: G05D 1/02

(54) **SYSTEM AUS EINEM SICH SELBSTTÄTIG INNERHALB EINER UMGEBUNG FORTBEWEGENDEN FAHRZEUG UND EINER IN DER UMGEBUNG BEFINDLICHEN TÜR**
SYSTEM CONSISTING OF A VEHICLE MOVING AUTOMATICALLY WITHIN AN ENVIRONMENT AND A DOOR IN THE ENVIRONMENT
SYSTÈME D'UN VÉHICULE AUTONOME EN MOUVEMENT DANS UN ENVIRONNEMENT ET D'UNE PORTE SITUÉE DANS L'ENVIRONNEMENT

(30) Priorität: 12.06.2017 DE 102017112839
(43) Veröffentlichungstag der Anmeldung: 19.12.2018
(73) Patentinhaber: Vorwerk & Co. Interholding GmbH, 42275 Wuppertal (DE)
(72) Erfinder: Erkek, David, 5000 Aarau (CH); Hackert, Georg, 44869 Bochum (DE); Isenberg, Gerhard, 50668 Köln (DE); Ortmann, Roman, 47057 Duisburg (DE); Schmidt, Andreas, 40822 Mettmann (DE)
(74) Vertreter: Müller, Enno

(56) Entgegenhaltungen:
- JP-A- 2002 085 305
- US-A1- 2017 112 345
- US-B2- 8 010 230

## Beschreibung

### Gebiet der Technik

Die Erfindung betrifft ein System aus einem sich selbsttätig innerhalb einer Umgebung fortbewegenden, unbemannten Fahrzeug, insbesondere Reinigungsroboter, einer Steuereinrichtung und einer in der Umgebung befindlichen Tür mit einer Türzarge und einem Türblatt, wobei das Fahrzeug eine Detektionseinrichtung zur Detektion von Objektdaten innerhalb der Umgebung aufweist, wobei die Tür einen elektronischen Aktor zum Ändern eines Öffnungszustandes der Tür aufweist, und wobei die Steuereinrichtung eingerichtet ist, in Abhängigkeit von einem Betriebszustand und/oder einer Position des Fahrzeugs einen Steuerbefehl zur Betätigung des Aktors auszugeben.

Des Weiteren betrifft die Erfindung ein Verfahren zum Betrieb eines Systems aus einem sich selbsttätig innerhalb einer Umgebung fortbewegenden, unbemannten Fahrzeug, einer Steuereinrichtung und einer in der Umgebung befindlichen Tür mit einer Türzarge und einem Türblatt, wobei eine Detektionseinrichtung des Fahrzeugs Objektdaten innerhalb der Umgebung aufnimmt.

### Stand der Technik

Sich selbsttätig innerhalb einer Umgebung fortbewegende, unbemannte Fahrzeuge sind im Stand der Technik ausreichend bekannt. Bei dem Fahrzeug kann es sich beispielsweise um jede Art von Bodenbearbeitungsroboter handeln, beispielsweise Saugroboter, Wischroboter, Schleif- und/oder Polierroboter oder dergleichen. Des Weiteren kann das Fahrzeug auch ein Fahrzeug sein, welches keine Bearbeitungsaufgabe, sondern vielmehr nur eine Transportaufgabe wahrnimmt.

Fahrzeuge der vorgenannten Art weisen üblicherweise eine Detektionseinrichtung zur Detektion von Objektdaten innerhalb der Umgebung auf. Dadurch ist es möglich, dass sich das Fahrzeug innerhalb der Umgebung orientiert und eine Kollision mit Hindernissen vermeidet.

Insbesondere beim selbsttätigen Verfahren des Fahrzeugs innerhalb einer aus mehreren Räumen bestehenden Wohnung, kann es vorkommen, dass das Fahrzeug bei einer Fortbewegung von einem Raum in einen benachbarten Raum vor einer geschlossenen oder nicht ausreichend weit geöffneten Tür steht. Daher wurden im Stand der Technik Mittel entwickelt, die ein Öffnen zumindest solcher Türen ermöglichen, deren Türblatt nur angelehnt ist, jedoch nicht mit der Türzarge verriegelt oder sonst wie nur durch Betätigung einer Türklinke zu trennen ist.

Die Druckschrift DE 10 2011050 357 A1 offenbart beispielsweise ein System aus einem Fahrzeug und einer Tür, deren Türblatt sich relativ zu einer korrespondierenden Türzarge derart in einer Öffnungsstellung befindet, dass ein freigegebener Durchlass nicht für ein Durchfahren des Fahrzeugs ausreicht. Es ist offenbart, dass das Fahrzeug das Türblatt durch Anstoßen weiter öffnet oder das Fahrzeug eine Saugkopplung zu dem Türblatt herstellt und die Tür durch Rückwärtsfahren weiter öffnet.

Des Weiteren ist beispielsweise aus der CN 204427945 U ein Fahrzeug bekannt, welches einen Greifarm mit einem Betätigungselement aufweist, das auf einer Gerätehöhe des Fahrzeugs auf einen korrespondierenden Mechanismus einer Tür einwirken kann und dadurch auch eine Türklinke bzw. eine Türfalle und/oder einen Türriegel betätigen kann.

Aus der US 8,010,230 B2 ist ein sich selbsttätig fortbewegender Roboter bekannt, der Waren an einen Zielort transportiert. Um auf dem Weg liegende Hindernisse zu vermeiden, verfügt der Roboter über eine Mehrzahl von Sensoren sowie eine Kommunikationsschnittstelle zur Kommunikation mit einer automatisch zu öffnenden Tür, die einen Weg zu dem Zielort versperrt. Mittels der Kommunikationsschnittstelle kann der Roboter einen Schalter einer automatischen Tür ferngesteuert betätigen. Zu diesem Zweck übermittelt der Roboter ein elektromagnetisches Signal an einen Empfänger der Tür, woraufhin die Tür geöffnet wird.

Die JP 2002-085305 A offenbart einen Reinigungsroboter, welcher einen Fortbewegungspfad durch eine Mehrzahl von Räumen verfolgen kann. Der Roboter kann einen Befehl zum Öffnen einer Tür direkt an diese übermitteln, so dass die Tür geöffnet wird. Alternativ kann die Tür auch einen Öffnungsbefehl von einem Server erlangen.

Zudem ist aus der US 2017/112,345 A1 ein Fahrzeug bekannt, welches selbst keinen Steuerbefehl zur Betätigung eines Aktors einer Tür übermittelt, sondern stattdessen in ein Heimnetzwerk eingebunden ist, welches eine aktuelle Position des Fahrzeug erkennt und dann Einrichtungen der Umgebung, die der aktuellen Position des Fahrzeugs entsprechen, aktiviert.

### Zusammenfassung der Erfindung

Ausgehend von dem vorgenannten Stand der Technik ist es Aufgabe der Erfindung, ein System der vorgenannten Art zu schaffen, welches eine gezielte Änderung eines Öffnungszustandes einer bestimmten Tür durch ein Fahrzeug ermöglicht.

Zur Lösung der vorgenannten Aufgabe wird vorgeschlagen, dass die Tür ein einen optischen und/oder elektronischen Code aufweisendes Identifikationsmittel aufweist und wobei das Fahrzeug ein Erfassungsmittel zur Identifikation der Tür, nämlich ein Lesegerät für den optischen und/oder elektronischen Code der Tür aufweist, und wobei die Steuereinrichtung eingerichtet ist, einen Steuerbefehl an den Aktor der identifizierten Tür zu übermitteln.

Bei dem Erfassungsmittel handelt es sich um ein Lesegerät für einen optischen und/oder elektronischen Code der Tür. Das Erfassungsmittel ist ein Sensor des Fahrzeugs bzw. einer Steuereinrichtung des Systems, welcher eine räumliche Position der Tür bestimmen kann und/oder gegebenenfalls weitere Informationen, wie beispielsweise deren Art, Maße, Öffnungsrichtung und dergleichen. Des Weiteren ist das Erfassungsmittel vorteilhaft geeignet, zu erkennen, ob sich die Tür derzeit in einem offenen oder in einem geschlossenen Zustand befindet. Auch nur teilweise geöffnete Türen können erkannt werden, beispielsweise ein Zwischenzustand einer schwenkbaren Tür oder einer Schiebetür. Bei dem Erfassungsmittel kann es sich insbesondere um eine Bilderfassungseinrichtung wie eine Kamera oder ein Kamerachip handeln und/oder um ein Lesegerät, welches geeignet ist einen optischen oder elektrischen Code der Tür auszulesen. Bei dem Code kann es sich insbesondere um einen Barcode, QR-Code, ein Lichtsignal, einen RFID-Chip oder dergleichen handeln. Die Detektion innerhalb der Umgebung vorhandener Türen sowie weiterer Informationen kann vorzugsweise während einer Lernfahrt des Fahrzeugs erfolgen, woraufhin die gesammelten Informationen in der Umgebungskarte gespeichert bzw. mit dieser verlinkt werden. Mittels des Erfassungsmittels erfolgt somit eine Registrierung der jeweiligen Tür des Systems. Das Fahrzeug kann jede Tür anfahren, diese anhand eines optischen und/oder elektrischen Codes identifizieren und eine räumliche Position der Tür innerhalb der Umgebung bestimmen. Zusätzlich kann der Code der Tür auch eine Information darüber enthalten, mit welcher Technologie die jeweilige Tür geöffnet werden kann. Alternativ kann eine solche Information jedoch auch beispielsweise durch einen Nutzer über eine Nutzerschnittstelle, insbesondere ein mobiles Gerät, übermittelt werden. Die aufgenommenen Informationen über eine oder mehrere Türen können dann an eine zentrale Steuereinrichtung des Systems übermittelt werden. Die zentrale Steuereinrichtung verfügt dann über sämtliche Informationen der Türen innerhalb des Systems. Sofern dann ein zusätzliches oder neues Fahrzeug an dem System angemeldet wird, kann sich dieses mit der zentralen Steuereinrichtung verbinden, und auf sämtliche Informationen zu den vorhandenen Türen mit automatischer Betätigungsmöglichkeit zugreifen. Die Informationen der zentralen Steuereinrichtung können in die Umgebungskarte des Fahrzeugs übernommen oder mit dieser verknüpft werden. Das Einlesen der Informationen von der zentralen Steuereinrichtung in die Umgebungskarte bzw. einen Speicher des Fahrzeugs kann dabei beispielsweise erfolgen, wenn sich das Fahrzeug in einer Basisstation befindet, um beispielsweise einen Akkumulator aufzuladen. Die Basisstation und die zentrale Steuereinrichtung können über einen drahtgebundenen Kommunikationskanal, beispielsweise per PowerLAN, verfügen.

Das Fahrzeug ist ausgebildet, mittels eines elektronischen Steuerbefehls auf die Tür einzuwirken und eine Änderung eines Öffnungszustandes der Tür zu veranlassen. Zu diesem Zweck ist die Steuereinrichtung ausgebildet, einen Steuerbefehl an den elektronischen Aktor der Tür zu übermitteln, welcher Steuerbefehl einen Befehl zum Öffnen oder Schließen der Tür beinhaltet. Der Steuerbefehl kann vorzugsweise bereits aus einer Entfernung übermittelt werden, bei welcher sich das Fahrzeug nicht in einem Schwenkbereich der Tür befindet. Es ist somit nicht erforderlich, dass das Fahrzeug an die Tür heranfährt, so dass keine Bewegungseinschränkung des Fahrzeugs und/ oder der Tür resultiert. Die Steuereinrichtung dient somit als Fernbedienung für den Aktor der Tür, so dass das Fahrzeug bei seiner Fortbewegung durch mehrere Räume einer Wohnung beispielsweise selbst auf die Türen einwirken kann, um seine Verfahrroute hindernisfrei fortsetzen zu können. Die Steuereinrichtung kann entweder eine in das Fahrzeug integrierte Steuereinrichtung sein oder eine externe Steuereinrichtung, insbesondere eine zentrale Steuereinrichtung des Systems. Die Steuereinrichtung ist in beiden Fällen dazu ausgebildet, einen Steuerbefehl in Abhängigkeit von einem Betriebszustand und/oder einer Position des Fahrzeugs zu generieren und/ oder zu übermitteln. Der Betriebszustand des Fahrzeugs kann beispielsweise ein aktiver Zustand während eines Reinigungsbetriebs, während einer Überwachungspatrouille, während eines Regenerations- und/oder Akkuladebetriebs oder ähnliches sein. Die Position des Fahrzeugs kann ein Abstand zu einer Tür, ein Aufenthalt an einer Basisstation, eine Position entlang eines geplanten Verfahrweges oder ähnliches sein. In dem Fall, dass es sich bei der Steuereinrichtung um eine relativ zu dem Fahrzeug externe Steuereinrichtung handelt, kann die Steuereinrichtung den Steuerbefehl entweder selbst generieren, in Abhängigkeit von einem Zustand und/oder einer Position des Fahrzeugs, oder einen Steuerbefehl von dem Fahrzeug empfangen und diesen unverändert und/oder modifiziert an den Aktor der Tür weiterleiten.

Insbesondere wird vorgeschlagen, dass das Fahrzeug eine Recheneinrichtung zum Erstellen einer Umgebungskarte anhand der detektierten Objektdaten aufweist, wobei die Umgebungskarte oder eine mit der Umgebungskarte verknüpfte Datei eine Information über eine räumliche Position einer Tür innerhalb der Umgebung aufweist. Die Umgebungskarte kann beispielsweise in einem Datenspeicher des Fahrzeugs und/oder einem Datenspeicher des Systems gespeichert sein und beispielsweise Positionen von Objekten, Raumbegrenzungen, Türen, Fahrzeugen und dergleichen beinhalten. Die Umgebungskarte dient dem Fahrzeug zur Navigation und Selbstlokalisierung und der Steuereinrichtung zum Generieren eines Steuerbefehls. Beispielsweise kann es vorgesehen sein, dass eine Recheneinrichtung des Fahrzeugs einen SLAM-Algorithmus ausführt, um die Umgebungskarte aufzubauen bzw. zu verändern und sich innerhalb der Umgebung zu lokalisieren. Die Umgebungskarte beinhaltet vorteilhaft auch die Information über eine räumliche Position einer Tür innerhalb der Umgebung, wobei vorteilhaft zum einen die Position der Tür gespeichert ist, zum anderen gegebenenfalls jedoch auch Informationen wie eine Breite der Tür, eine Schwenkrichtung des Türblattes und gegebenenfalls eine Tiefe der Türzarge, welche häufig im Wesentlichen der Dicke einer Raumwand entspricht. Es ist nicht erforderlich, dass die Information über die Tür in der Umgebungskarte selbst gespeichert ist. Vielmehr kann eine Information oder können mehrere Informationen auch in einer separaten Datei gespeichert sein, welche eine Verknüpfung zu der Umgebungskarte aufweist. Denkbar ist beispielsweise, dass in der Umgebungskarte nur die räumliche Position der Tür gespeichert ist, während zusätzliche Informationen, wie beispielsweise deren Schwenkrichtung und Durchgangsbreite in einer separaten Datei gespeichert sind, auf welche die Recheneinrichtung zugreifen kann, wenn weitere Informationen über diese Tür benötigt werden.

Es wird vorgeschlagen, dass die Steuereinrichtung eingerichtet ist, automatisch einen Steuerbefehl zu generieren, wenn erkannt wird, dass eine Fortbewegungsroute des Fahrzeugs eine Tür beinhaltet. Gemäß dieser Ausführung ist das System so ausgebildet, dass diejenigen Türen der Umgebung, durch welche eine Fortbewegungsroute des Fahrzeugs führt, automatisch im Vorhinein geöffnet werden, so dass es nicht zu einer Verzögerung der Fortbewegung des Fahrzeugs kommt, weil dieses auf das Verschwenken eines Türblatts warten muss. Des Weiteren ist es nicht erforderlich, mehrere separate Steuerbefehle während der Fortbewegung des Fahrzeugs zu generieren. Vielmehr kann beispielsweise zu Beginn einer geplanten Fortbewegungsroute ein einziger Steuerbefehl generiert werden, welcher Öffnungsbefehle für mehrere Türen beinhaltet. Falls das Fahrzeug nach Ausübung der jeweiligen Aufgabe die Tür wieder in umgekehrte Richtung kreuzt, kann ein weiterer Steuerbefehl an die Tür übermittelt werden, welcher einen Schließbefehl beinhaltet. Dadurch kann eine Tür, welche vor Beginn der Fortbewegung des Fahrzeugs geschlossen war, erneut verschlossen werden. Alternativ kann ein Schließen der Tür auch dadurch erfolgen, dass das Fahrzeug das Türblatt wieder in Richtung der Türzarge schiebt. Besonders bevorzugt erfolgt jedoch auch das Schließen der Tür vollautomatisch. Beispielsweise kann die Steuereinrichtung anhand der aktuellen Position des Fahrzeugs innerhalb der Umgebungskarte feststellen, ob ein zuletzt befahrener Raum wieder verlassen wurde. In diesem Fall kann der Aktor der Tür so gesteuert werden, dass ein definierter Zustand eingenommen wird, beispielsweise eine geschlossene Stellung der Tür. Insbesondere kann dies vorteilhaft sein, wenn sich Personen in dem Raum befinden, welche nicht gestört werden sollen. Es ist auch denkbar, dass in der Umgebungskarte oder in Verbindung mit der Fortbewegungsroute festgelegt ist, welche Türen einer Wohnung nicht geöffnet werden dürfen oder nur zu bestimmten Zeiten geöffnet werden dürfen, um beispielsweise eine Störung einer Person in einem bestimmten Raum zu verhindern.

Gemäß einer vorteilhaften Ausführungsform wird vorgeschlagen, dass die Steuereinrichtung eine zentrale Steuereinrichtung ist, insbesondere eine Steuereinrichtung eines Hausautomationsnetzwerkes. Gemäß dieser Ausführungsform ist das System aus zumindest einem Fahrzeug und einer Tür ein Teil eines Hausautomationsnetzwerkes, in welchem eine Mehrzahl von Geräten des Haushalts miteinander kommunizieren. Die Kommunikation erfolgt über die zentrale Steuereinrichtung, welche beispielsweise ein Access Point eines WLAN-Netzwerkes sein kann. Es ist möglich, dass die zentrale Steuereinrichtung als ein separates Gerät ausgebildet ist. Des Weiteren kann aber auch eine Steuereinrichtung eines Fahrzeugs die Funktion der zentralen Steuereinrichtung übernehmen. Die Türen des Systems bzw. des Hausautomationsnetzwerkes sind mittels der zentralen Steuereinrichtung steuerbar. In diesem Zusammenhang kann die zentrale Steuereinrichtung auch auf einen Speicher des Hausautomationsnetzwerkes zugreifen, in welchem nicht nur Informationen über die zugehörigen Fahrzeuge und Türen gespeichert sind, sondern beispielsweise auch über andere Geräte bzw. Einrichtungen des Hausautomationsnetzwerkes, beispielsweise Audio- und/oder Videosysteme, Rollläden, Beleuchtung, Klimatisierung, Küchengeräte, weitere Haushaltsgeräte, Heizung oder dergleichen. Alle Informationen des Hausautomationsnetzwerkes können in die Umgebungskarte des Fahrzeugs integriert werden oder mit der Umgebungskarte verknüpft werden.

Des Weiteren wird vorgeschlagen, dass das Fahrzeug und/oder die Steuereinrichtung eine Registriereinrichtung zur manuellen Registrierung einer Tür durch einen Nutzer und/oder zur automatischen Registrierung einer Tür aufweisen. Beispielsweise kann das Fahrzeug oder eine zentrale Steuereinrichtung des Systems eine manuelle Eingabeschnittstelle, beispielsweise eine Tastatur oder ein Touchscreen aufweisen, mittels welchem ein Nutzer eine Tür manuell registrieren kann. Für die Registrierung gibt er beispielsweise einen Typ und eine Position der Tür in das Fahrzeug bzw. die separate Steuereinrichtung ein. Die Informationen können dann wiederum in eine Umgebungskarte übernommen werden oder mit einer solchen verknüpft werden. Des Weiteren kann das Fahrzeug oder die Steuereinrichtung jedoch auch eine Registriereinrichtung zur automatischen Registrierung einer Tür aufweisen. In diesem Fall kann es sich bei der Registriereinrichtung beispielsweise um einen Sensor handeln, welcher Informationen der Tür detektiert. Für die Registrierung kann das Fahrzeug beispielsweise jede Tür ansteuern und deren Position vermessen, eine Öffnungsrichtung der Tür bestimmen usw.

Es wird vorgeschlagen, dass der Aktor der Tür einen Elektromagneten, einen Federmechanismus und/oder einen Elektromotor aufweist. Die Türen können somit durch unterschiedliche Technologien automatisch geöffnet werden. Beispielsweise kann der Aktor einen Elektromagneten aufweisen, welcher vorteilhaft in der Türzarge integriert ist. Das Türblatt kann eine korrespondierende Metallplatte aufweisen. Der bestromte Zustand des Elektromagneten kann dabei entweder einer Vorzugsstellung der Tür entsprechen oder nicht, je nachdem ob eher eine geschlossene Tür oder eine geöffnete Tür an dem jeweiligen Raum gewünscht ist. Dem Aktor kann ein Federmechanismus zugeordnet sein, welcher eine Verlagerung des Türblattes relativ zu der Türzarge bewirkt. Der Federmechanismus kann so ausgelegt sein, dass zumindest ein Durchgangsbereich freisteht, welcher ausreicht, um das Fahrzeug kollisionsfrei hindurch zu manövrieren. Alternativ kann auch vorgesehen sein, dass der Elektromagnet nur einen Riegel und/oder eine Falle eines Türschlosses betätigt und der Federmechanismus nur eine geringe Verlagerung des Türblattes, beispielsweise um wenige Zentimeter, bewirkt, so dass das Fahrzeug das Türblatt noch weiter verlagern muss, insbesondere durch ein Verschieben. Insbesondere kann die Tür auch mit einem elektrischen Türöffner, beispielsweise einem selbstversorgenden Türsummer, ausgestattet sein. Ein Verlagern des Türblattes relativ zu der Türzarge kann auch durch einen Elektromotor erfolgen.

Es wird vorgeschlagen, dass das Fahrzeug und/oder der Aktor der Tür und/oder die zentrale Steuereinrichtung ein Kommunikationsmodul aufweisen, insbesondere ein Funkmodul. Die Kommunikation zwischen den Komponenten des Systems, nämlich einem oder mehreren Fahrzeugen, einem oder mehreren Aktoren und/oder einer zentralen Steuereinrichtung kann vorteilhaft mittels drahtloser Kommunikation erfolgen, beispielsweise mittels WLAN, Bluetooth, optischer Kommunikation oder ähnlichem. Des Weiteren können beispielsweise die zentrale Steuereinrichtung des Systems und ein Aktor einer Tür (Türzarge) drahtgebunden kommunizieren. Eine drahtgebundene Kommunikation ist beispielsweise über PowerLAN möglich.

Neben dem zuvor beschriebenen System wird mit der Erfindung des Weiteren ein Verfahren zum Betrieb eines Systems aus einem sich selbsttätig innerhalb einer Umgebung fortbewegenden, unbemannten Fahrzeug, einer Steuereinrichtung und einer in der Umgebung befindlichen Tür mit einer Türzarge und einem Türblatt vorgeschlagen, wobei eine Detektionseinrichtung des Fahrzeugs Objektdaten innerhalb der Umgebung aufnimmt, wobei ein Erfassungsmittel des Fahrzeugs eine Tür identifiziert, nämlich ein Lesegerät des Fahrzeugs einen optischen und/oder elektronischen Code eines Identifikationsmittels der Tür identifiziert, und wobei die Steuereinrichtung in Abhängigkeit von einem Betriebszustand und/oder einer Position des Fahrzeugs einen Steuerbefehl zur Betätigung eines elektronischen Aktors der identifizierten Tür ausgibt, wobei der elektronische Aktor den Steuerbefehl empfängt und daraufhin einen Öffnungszustand der Tür ändert. Die Vorteile und Merkmale des Verfahrens ergeben sich wie zuvor in Bezug auf das System näher erläutert. Es ist möglich, dass die Tür aus einer größeren Distanz geöffnet wird, und zwar durch einen Steuerbefehl, welcher einen Aktor der Tür betätigt, der schließlich einen bestimmten Öffnungszustand der Tür herbeiführt. Wie zuvor erläutert, kann die Übertragung des Steuerbefehls von dem Fahrzeug an den Aktor der Tür entweder direkt erfolgen oder über eine separate zentrale Steuereinrichtung des Systems. Eine Kommunikation ist dabei vorteilhaft durch eine drahtlose Funkkommunikation oder auch eine optische Kommunikation möglich.

Insbesondere kann es vorgesehen sein, dass eine Recheneinrichtung des Fahrzeugs anhand der detektierten Objektdaten eine Umgebungskarte erstellt, wobei in der Umgebungskarte oder in einer mit der Umgebungskarte verknüpften Datei eine Information über eine räumliche Position einer Tür innerhalb der Umgebung gespeichert wird. Das Fahrzeug detektiert somit die Positionen und gegebenenfalls weitere Informationen der in der Umgebung vorhandenen Türen. Diese Informationen werden in der Umgebungskarte gespeichert oder mit dieser verlinkt. Alternativ könnte auch eine separate Steuereinrichtung des Systems eine entsprechende Umgebungskarte erstellen und gegebenenfalls an das Fahrzeug übertragen.

Des Weiteren kann es vorgesehen sein, dass die Steuereinrichtung des Fahrzeugs oder eine separate Steuereinrichtung des Systems automatisch einen Steuerbefehl generiert, wenn erkannt wird, dass eine Fortbewegungsroute des Fahrzeugs eine Tür beinhaltet. Bei dieser Verfahrensführung wird eine Tür nicht erst dann geöffnet, wenn sich die Notwendigkeit dazu ergibt, zum Beispiel weil das Fahrzeug aktuell auf die Tür zufährt. Vielmehr kann eine oder können mehrere Türen im Vorhinein, vor Start der Fortbewegung, geöffnet werden. Dies ermöglicht eine besonders einfache und zeitsparende Fortbewegung des Fahrzeugs innerhalb der Umgebung.

Des Weiteren wird vorgeschlagen, dass eine Registrierung einer Tür an dem System manuell durch einen Nutzer, mittels einer Registriereinrichtung des Fahrzeugs und/oder der Steuereinrichtung durchgeführt wird. Insbesondere kann eine automatische Registrierung einer Tür erfolgen. Zur Registrierung kann ein Erfassungsmittel des Fahrzeugs und/oder der Steuereinrichtung eine Tür innerhalb der Umgebung detektieren und/oder identifizieren. Des Weiteren kann das Verfahren beinhalten, dass ein Öffnungszustand der Tür detektiert wird. Die Detektion bzw. Identifikation der Tür erfolgt vorteilhaft durch eine Bilderfassungseinrichtung und/oder ein Lesegerät, welches zum Detektieren eines optischen und/oder elektromagnetischen Codes der Tür ausgebildet ist.

Der Öffnungszustand der Tür kann vorteilhaft durch einen Elektromagneten und/oder einen Federmechanismus und/oder einen Elektromotor geändert werden, welcher der Tür zugeordnet ist. Insbesondere können auch bekannte elektrische Türöffner, beispielsweise selbstversorgende Türsummer, zum Einsatz kommen.

### Kurze Beschreibung der Zeichnungen

Im Folgenden wird die Erfindung anhand von Ausführungsbeispielen näher erläutert. Es zeigen:
- Fig. 1: eine Registrierungssituation einer automatisch öffenbaren Tür an einem Fahrzeug,
- Fig. 2: ein Übermitteln eines Steuerbefehls zum Öffnen der Tür von dem Fahrzeug an einen Aktor der Tür,
- Fig. 3: ein Übermitteln eines Steuerbefehls von einem Fahrzeug an eine zentrale Steuereinrichtung, welche mit einem Aktor einer Tür in Verbindung steht,
- Fig. 4: das Fahrzeug und die Tür gemäß Fig. 3 zu einem Zeitpunkt nach dem Öffnen der Tür,
- Fig. 5: das Fahrzeug mit einer darin gespeicherten Umgebungskarte.

### Beschreibung der Ausführungsformen

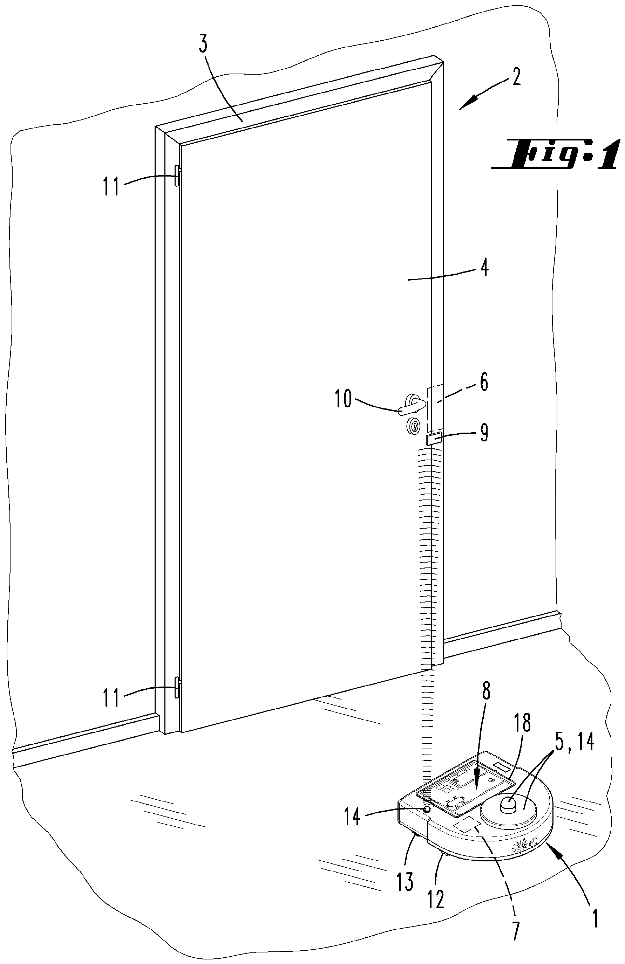

Figur 1 zeigt ein System aus einem Fahrzeug 1 und einer Tür 2. Die Tür 2 weist in üblicher Art und Weise eine Türzarge 3, ein Türblatt 4, eine Türklinke 10 und zwei Türscharniere 11 auf. Des Weiteren verfügt die Tür 2 über einen elektronischen Aktor 6 zum Ändern eines Öffnungszustandes der Tür 2. Der Aktor 6 beinhaltet hier beispielsweise einen Elektromotor zur Verlagerung eines Riegels 15 und einer Türfalle 16 des Türblattes 4. Den Türscharnieren 11 ist jeweils ein Federmechanismus (nicht dargestellt) zugeordnet, welcher bei Lösen der Türfalle 16 bzw. des Riegels 15 ein automatisches Verschwenken des Türblattes 4 relativ zu der Türzarge 3 bewirkt, und zwar um solch ein Maß, dass das Fahrzeug 1 zwischen der Türzarge 3 und dem Türblatt 4 in einen benachbarten Raum fahren kann.

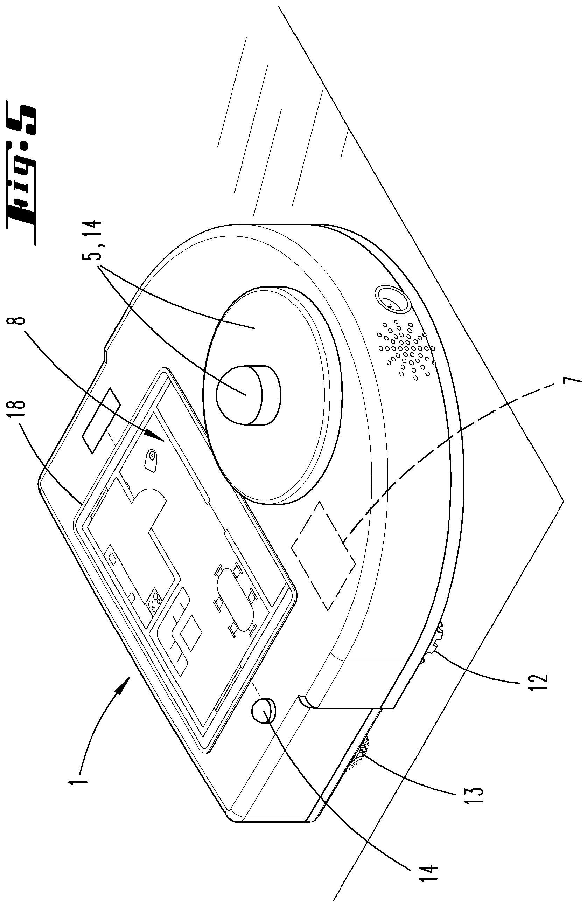

Das Fahrzeug 1, in Figur 5 näher dargestellt, ist hier ein selbsttätig verfahrbarer Saugroboter mit mehreren motorisch angetriebenen Rädern 12 und einem Reinigungselement 13, hier einer Borstenwalze. Das Fahrzeug 1 verfügt über Detektionseinrichtungen 5, nämlich hier eine Triangulationsmesseinrichtung zur Messung von Abständen zu Objekten der Umgebung, sowie eine Bilderfassungseinrichtung, welche ein Bild der Umgebung des Fahrzeugs 1 aufnehmen kann. Die Detektionseinrichtungen 5 sind vorteilhaft ausgebildet, in einem 360-Grad-Winkelbereich zu messen. Des Weiteren verfügt das Fahrzeug 1 über eine einer Steuereinrichtung 7 zugeordnete Recheneinrichtung (nicht dargestellt), die eingerichtet ist, aus den von den Detektionseinrichtungen 5 gemessenen Daten eine Umgebungskarte 8 zu erstellen. Die Umgebungskarte 8 beinhaltet Objekte der Umgebung, beispielsweise auch Türen 2 sowie deren momentanen Öffnungszustand. Die Steuereinrichtung 7 ist ausgebildet, anhand der Umgebungskarte 8 eine Verfahrroute für das Fahrzeug 1 festzulegen, vorzugsweise unter Vermeidung einer Kollision mit Objekten bzw. Türen 2. Zudem verfügt das Fahrzeug 1 über Erfassungsmittel 14, welche eingerichtet und ausgebildet sind, ein Identifikationsmittel 9 einer Tür 2 auszulesen. Bei dem Identifikationsmittel 9 kann es sich beispielsweise um ein RFID-Tag handeln, welches eine Identifikation der Tür 2 bereitstellt. Das Erfassungsmittel 14 ist hier beispielsweise ein RFID-Leser, welcher in Zusammenwirkung mit der Recheneinrichtung des Fahrzeugs 1 geeignet ist, anhand des RFID-Codes die Identität der Tür 2 festzustellen und Informationen über die Tür 2 zu erhalten, beispielsweise eine Information, dass es sich um eine automatisch öffenbare Tür 2 handelt, welche Technologie die Tür 2 zur automatischen Öffnung beinhaltet und welches Kommunikationsprotokoll zu verwenden ist. Des Weiteren ist auch die als Bilderfassungseinrichtung ausgebildete Detektionseinrichtung 5 ein Erfassungsmittel 14, mit welchem beispielsweise ein Barcode, QR-Code oder ähnliches gelesen werden kann.

Figur 1 stellt den Registrierungsprozess der Tür 2 an dem Fahrzeug 1 dar. Dieser Registrierungsprozess kann beispielsweise während einer Erkundungsfahrt des Fahrzeugs 1 erfolgen. Das Erfassungsmittel 14, hier der RFID-Leser des Fahrzeugs 1, ist aktiv und sendet ein Anregungssignal aus, welches von den Identifikationsmitteln 9 der Tür 2, nämlich hier RFID-Tags, mit einem Signal beantwortet wird, das Informationen über den Aktor 6 der Tür 2 beinhaltet. Aus dem von dem Identifikationsmittel 9 zurückgesandten Signal erhält das Fahrzeug 1, bzw. dessen Steuereinrichtung 7, Hinweise über die Identität und Merkmale der Tür 2 bzw. deren Aktor 6. Die Steuereinrichtung 7 des Fahrzeugs 1 bzw. deren Recheneinrichtung kann diese Daten speichern und/oder verarbeiten, beispielsweise in der Umgebungskarte 8 hinterlegen.

Ein solcher Registrierungsvorgang kann an einer Vielzahl von Türen 2 stattfinden, die sich innerhalb der Umgebung des Fahrzeugs 1 befinden. Das Fahrzeug 1 kann hintereinander jede dieser Türen 2 anfahren und deren Identifikationsmittel 9 auslesen, sowie zusätzlich deren Position und gegebenenfalls Dimension innerhalb der Umgebung bestimmen.

Obwohl dies nicht gezeigt ist, könnte eine Tür 2 selbstverständlich auch über die Detektionseinrichtung 5, nämlich die Bilderfassungseinrichtung, des Fahrzeugs 1 detektiert werden. Des Weiteren können auch andere Identifikationsmittel 9, nämlich beispielsweise Barcodes, QR-Codes, iBeacons und dergleichen ausgelesen werden.

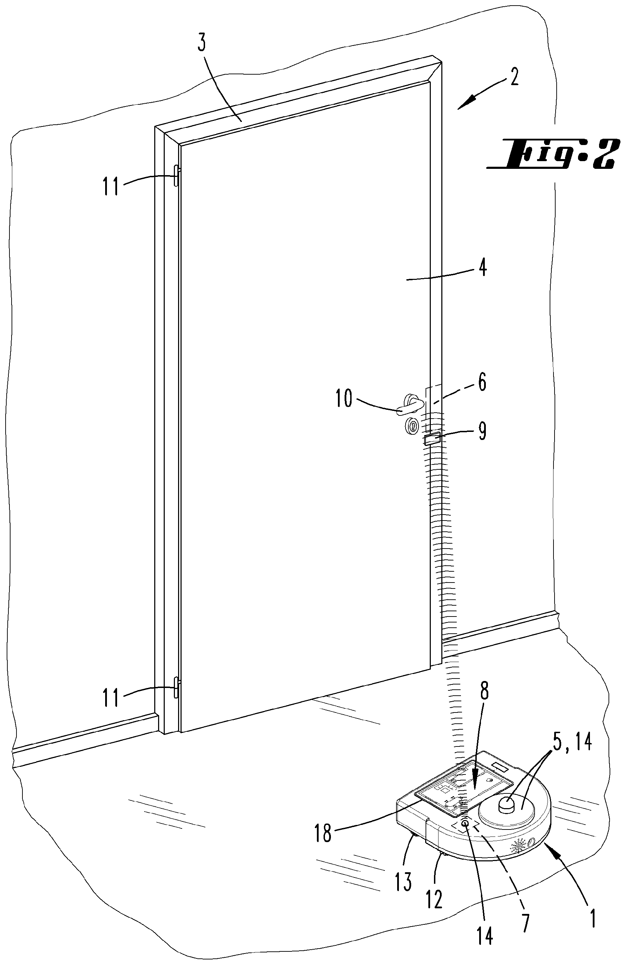

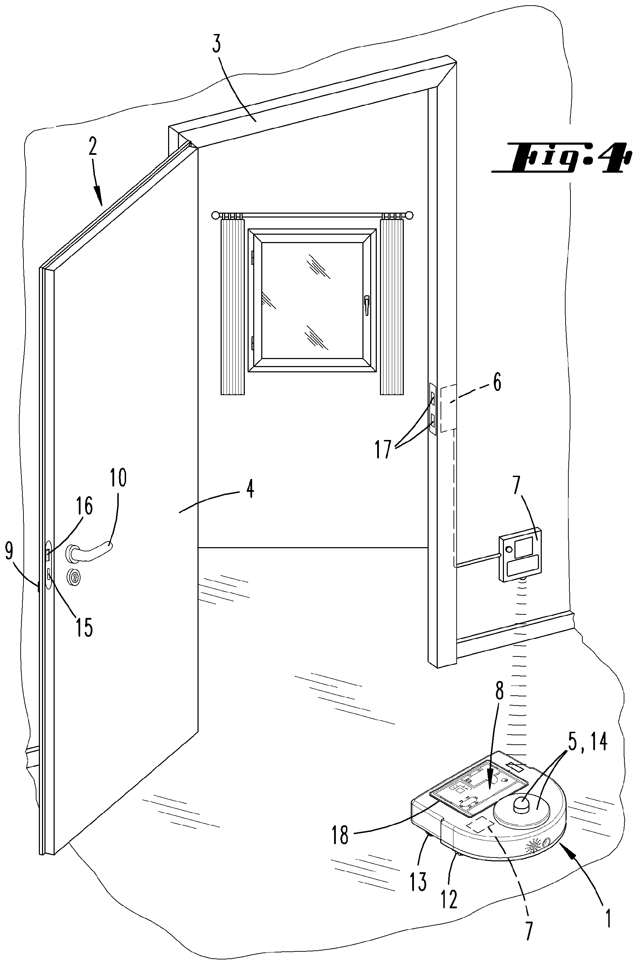

Figur 2 zeigt eine Situation nach abgeschlossener Registrierung der Tür 2. Das Fahrzeug 1 bewegt sich entlang einer Fortbewegungsroute durch die Wohnung. In der Fortbewegungsroute des Fahrzeugs 1 befindet sich die in der Figur dargestellte geschlossene Tür 2. Um die Fortbewegungsroute fortsetzen zu können, prüft die Steuereinrichtung 7 des Fahrzeugs 1 die in der Umgebungskarte 8 gespeicherten Merkmale und identifiziert die Tür 2 anhand des Identifikationsmittels 9 und/oder seiner aktuellen Eigenposition. Anhand der in der Umgebungskarte 8 gespeicherten Informationen hat die Steuereinrichtung 7 des Weiteren Kenntnis darüber, mit welchem Kommunikationsprotokoll ein Steuerbefehl an den Aktor 6 dieser Tür 2 zu übermitteln ist. Hier ist in der Umgebungskarte 8 beispielsweise die Information hinterlegt, dass der Aktor 6 ein WLAN-Kommunikationsmodul aufweist. Daraufhin übermittelt das Fahrzeug 1 mit einem entsprechenden WLAN-Kommunikationsmodul einen Steuerbefehl an den Aktor 6. Der Steuerbefehl ist ein Befehl zum Öffnen der Tür 2, d. h. zum Verschwenken des Türblatts 4 relativ zu der Türzarge 3. Daraufhin betätigt der Aktor 6, der hier einen Elektromotor aufweist, die Türfalle 16 und den Riegel 15 des Türblatts 4 derart, dass diese nicht mehr in korrespondierende Aussparungen 17 (siehe Figur 4) in der Türzarge 3 eingreifen. Aufgrund der Rückstellkraft des den Türscharnieren 11 zugeordneten Federmechanismus schwingt die Tür 2 auf, so dass das Fahrzeug 1 in den benachbarten Raum gelangen kann.

Nachdem das Fahrzeug 1 den benachbarten Raum wieder verlassen hat, kann vorgesehen sein, dass das Fahrzeug 1 die Tür 2 wieder schließt, indem das Fahrzeug 1 gegen das Türblatt 4 fährt und dieses entgegen der Rückstellkraft des Federmechanismus in Richtung der Türzarge 3 verlagert bis schließlich die Türfalle 16 wieder einrastet.

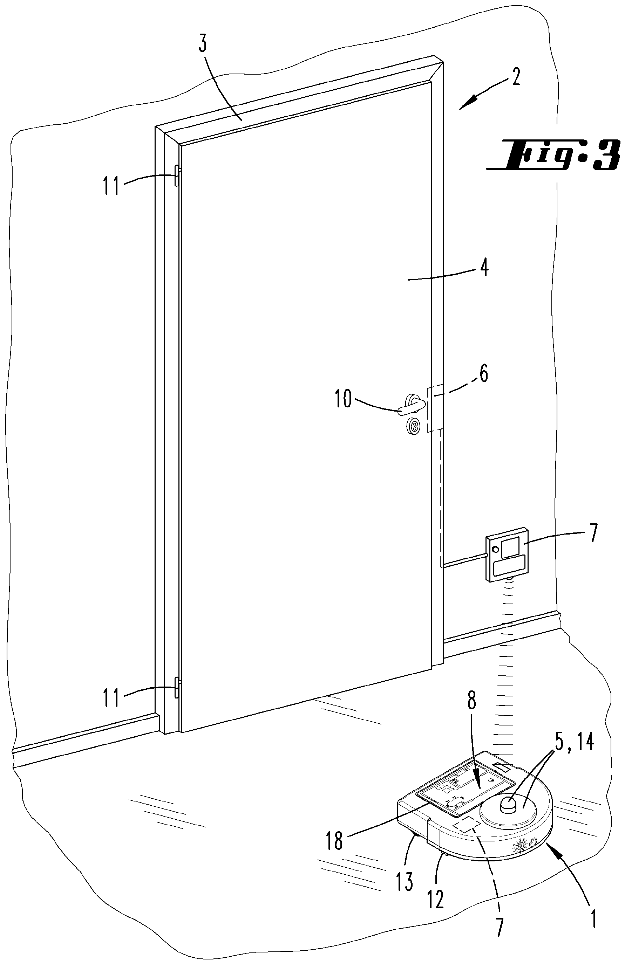

Die Figuren 3 und 4 zeigen eine weitere Ausführungsform der Erfindung, bei welcher das Fahrzeug 1 und die Tür 2 Teil eines Hausautomationssystems mit einer separaten, zentralen Steuereinrichtung 7 sind. Bei dieser Ausführungsform kommunizieren das Fahrzeug 1 und die Tür 2 über die separate Steuereinrichtung 7 miteinander. Gegebenenfalls können noch weitere Fahrzeuge 1 und/oder Türen 2 oder auch ganz andere Geräte, wie beispielsweise Rollläden, Klimatisierung, Beleuchtung und dergleichen innerhalb des Hausautomationsnetzwerkes miteinander verbunden sein und durch die zentrale Steuereinrichtung 7 Steuerbefehle erhalten.

Gemäß dieser Ausführungsform erfolgt die Registrierung sowohl der Türen 2 als auch der Fahrzeuge 1 an der zentralen Steuereinrichtung 7. Die Registrierung der Tür 2 kann dabei wie zuvor in Bezug auf Figur 1 erläutert erfolgen, nur dass die Registrierung der Tür 2 nun an der separaten Steuereinrichtung 7 und nicht an dem Fahrzeug 1 erfolgt. Dazu kann ein Nutzer des Systems ein externes Endgerät, beispielsweise ein Mobiltelefon, ein Laptop oder dergleichen, verwenden, um Informationen über die Tür 2 und deren Aktor 6 an die Steuereinrichtung 7 zu übermitteln. Das Fahrzeug 1 registriert sich ebenfalls an der zentralen Steuereinrichtung 7. Die von der zentralen Steuereinrichtung 7 empfangenen Informationen über die Türen 2 und gegebenenfalls weitere Fahrzeuge 1 werden vorzugsweise auch an das Fahrzeug 1 übermittelt und in dessen Umgebungskarte 8 integriert bzw. mit dieser verlinkt.

Die Kommunikation zwischen dem Fahrzeug 1 und der zentralen Steuereinrichtung 7 des Systems erfolgt hier beispielsweise mittels WLAN. Die Kommunikation zwischen der zentralen Steuereinrichtung 7 und dem Aktor 6 der Tür 2 erfolgt über einen drahtgebundenen Kommunikationskanal, hier beispielsweise mittels PowerLAN.

Die Erfindung gemäß dieser Ausführungsform kann nun so erfolgen, dass die Steuereinrichtung 7 des Fahrzeugs 1 eine Fortbewegungsroute durch die Umgebung plant, in welcher sich auch die Tür 2 befindet. Das Fahrzeug 1 übermittelt seine geplante Fortbewegungsroute per WLAN an die zentrale Steuereinrichtung 7. Die zentrale Steuereinrichtung 7 prüft daraufhin, welche Türen 2 sich innerhalb der geplanten Fortbewegungsroute befinden. Dabei kann die zentrale Steuereinrichtung 7 entweder per WLAN auf die Umgebungskarte 8 des Fahrzeugs 1 zugreifen, oder auf eine eigene Umgebungskarte. Sobald die Türen 2 identifiziert sind, die sich in der Fortbewegungsroute befinden, übermittelt die zentrale Steuereinrichtung 7 einen Steuerbefehl an jede dieser Türen 2 bzw. deren Aktor 6. Der Steuerbefehl beinhaltet eine Anweisung zum Verlagern des Türblatts 4 relativ zu der Türzarge 3 in einem solchen Maß, dass das Fahrzeug 1 kollisionsfrei seine Fortbewegungsroute durch die geöffnete Tür 2 fortsetzen kann. Der Aktor 6 kann seinen Öffnungsstatus zurück an die zentrale Steuereinrichtung 7 übermitteln, welche daraufhin die Umgebungskarte 8 anpasst bzw. den Öffnungsstatus weiter an das Fahrzeug 1 übermittelt.

Figur 4 zeigt den geöffneten Zustand der Tür 2, in welchem das Türblatt 4 so weit von der Türzarge 3 weggeschwenkt ist, dass das Fahrzeug 1 ohne Probleme die Türöffnung passieren kann.

Figur 5 zeigt schließlich das Fahrzeug 1 in einer vergrößerten Darstellung. Das Fahrzeug 1 ist hier als autonomer Reinigungsroboter ausgebildet. Das Fahrzeug 1 weist ein Reinigungselement 13 auf, nämlich hier eine elektromotorisch angetriebene Borstenwalze. Des Weiteren verfügt das Fahrzeug 1 über Räder 12 zur autonomen Fortbewegung innerhalb der Umgebung. Die elektrische Versorgung des Fahrzeugs 1 erfolgt über einen nicht dargestellten Akkumulator. Erkennbar sind des Weiteren die Detektionseinrichtungen 5, nämlich hier eine 360-Grad-Triangulationsmesseinrichtung sowie eine Bilderfassungseinrichtung, nämlich eine Kamera. Diese werden hier im Einzelnen nicht näher beschrieben, sondern können dem Stand der Technik entnommen werden. Die Kamera funktioniert des Weiteren auch als Erfassungsmittel 14 zur Erfassung eines Identifikationsmittels 9 einer Tür 2. Des Weiteren verfügt das Fahrzeug 1 über ein separates Erfassungsmittel 14, welches hier beispielsweise ein RFID-Leser ist. In einem Speicher (nicht dargestellt) ist die Umgebungskarte 8 der Umgebung des Fahrzeugs 1 gespeichert. Diese beinhaltet, wie auf einem Display 18 des Fahrzeugs 1 dargestellt, einen Grundriss der Wohnung mit den darin enthaltenen Objekten, nämlich hier Möbelstücken und Raumbegrenzungen. Des Weiteren weist die Umgebungskarte 8 die Türen 2 auf, welche zuvor durch das Fahrzeug 1 bzw. die Steuereinrichtung 7 des Systems registriert wurden. In der Umgebungskarte 8 ist des Weiteren auch der jeweilige Schwenkbereich des Türblattes 4 der Tür 2 hinterlegt.

Mit der Umgebungskarte 8 kann des Weiteren ein Speicher mit zusätzlichen Informationen zu den Türen 2 verknüpft sein. Die Informationen können Informationen darüber enthalten, dass bestimmte Türen 2 grundsätzlich nicht oder nur zu bestimmten Zeiträumen geöffnet werden dürfen, um beispielsweise eine Störung eines Nutzers in einem bestimmten Raum zu verhindern.

### Liste der Bezugszeichen

- 1: Fahrzeug
- 2: Tür
- 3: Türzarge
- 4: Türblatt
- 5: Detektionseinrichtung
- 6: Aktor
- 7: Steuereinrichtung
- 8: Umgebungskarte
- 9: Identifikationsmittel
- 10: Türklinke
- 11: Türscharnier
- 12: Rad
- 13: Reinigungselement
- 14: Erfassungsmittel
- 15: Riegel
- 16: Türfalle
- 17: Aussparung
- 18: Display

## Patentansprüche

1. System aus einem sich selbsttätig innerhalb einer Umgebung fortbewegenden, unbemannten Fahrzeug (1), insbesondere Reinigungsroboter, einer Steuereinrichtung (7) und einer in der Umgebung befindlichen Tür (2) mit einer Türzarge (3) und einem Türblatt (4), wobei das Fahrzeug (1) eine Detektionseinrichtung (5) zur Detektion von Objektdaten innerhalb der Umgebung aufweist, wobei die Tür (2) einen elektronischen Aktor (6) zum Ändern eines Öffnungszustandes der Tür (2) aufweist, und wobei die Steuereinrichtung (7) eingerichtet ist, in Abhängigkeit von einem Betriebszustand und/oder einer Position des Fahrzeugs (1) einen Steuerbefehl zur Betätigung des Aktors (6) auszugeben, **dadurch gekennzeichnet, dass** die Tür (2) ein einen optischen und/oder elektronischen Code aufweisendes Identifikationsmittel (9) aufweist, und wobei das Fahrzeug (1) ein Erfassungsmittel (14) zur Identifikation der Tür (2), nämlich ein Lesegerät für den optischen und/oder elektronischen Code der Tür (2) aufweist, und wobei die Steuereinrichtung (7) eingerichtet ist, einen Steuerbefehl an den Aktor (6) der identifizierten Tür (2) zu übermitteln.

2. System nach Anspruch 1, **dadurch gekennzeichnet, dass** das Fahrzeug (1) eine Recheneinrichtung zum Erstellen einer Umgebungskarte (8) anhand der detektierten Objektdaten aufweist, wobei die Umgebungskarte (8) oder eine mit der Umgebungskarte (8) verknüpfte Datei eine Information über eine räumliche Position einer Tür (2) innerhalb der Umgebung aufweist.

3. System nach Anspruch 1 oder 2, **dadurch gekennzeichnet, dass** die Steuereinrichtung (7) eingerichtet ist, automatisch einen Steuerbefehl zu generieren, wenn erkannt wird, dass eine Fortbewegungsroute des Fahrzeugs (1) eine Tür (2) beinhaltet.

4. System nach einem der vorhergehenden Ansprüche, **dadurch gekennzeichnet, dass** die Steuereinrichtung (7) eine zentrale Steuereinrichtung (7) ist, insbesondere eine Steuereinrichtung (7) eines Hausautomationsnetzwerkes.

5. System nach einem der vorhergehenden Ansprüche, **dadurch gekennzeichnet, dass** das Fahrzeug (1) und/oder die Steuereinrichtung (7) eine Registriereinrichtung zur manuellen Registrierung einer Tür (2) durch einen Nutzer und/oder zur automatischen Registrierung einer Tür (2) aufweisen.

6. System nach einem der vorhergehenden Ansprüche, **dadurch gekennzeichnet, dass** der Aktor (6) der Tür (2) einen Elektromagneten, einen Federmechanismus und/oder einen Elektromotor aufweist.

7. System nach einem der vorhergehenden Ansprüche, **dadurch gekennzeichnet, dass** das Fahrzeug (1) und/oder der Aktor (6) der Tür (2) und/oder die zentrale Steuereinrichtung (7) ein Kommunikationsmodul aufweisen, insbesondere ein Funkmodul.

8. Verfahren zum Betrieb eines Systems aus einem sich selbsttätig innerhalb einer Umgebung fortbewegenden, unbemannten Fahrzeug (1), einer Steuereinrichtung (7) und einer in der Umgebung befindlichen Tür (2) mit einer Türzarge (3) und einem Türblatt (4), wobei eine Detektionseinrichtung (5) des Fahrzeugs (1) Objektdaten innerhalb der Umgebung aufnimmt, wobei ein Erfassungsmittel (14) des Fahrzeugs (1) eine Tür (2) identifiziert, nämlich ein Lesegerät des Fahrzeugs (1) einen optischen und/oder elektronischen Code eines Identifikationsmittels (9) der Tür (2) identifiziert, und wobei die Steuereinrichtung (7) in Abhängigkeit von einem Betriebszustand und/oder einer Position des Fahrzeugs (1) einen Steuerbefehl zur Betätigung eines elektronischen Aktors (6) der identifizierten Tür (2) ausgibt, wobei der elektronische Aktor (2) den Steuerbefehl empfängt und daraufhin einen Öffnungszustand der Tür (1) ändert.

9. Verfahren nach Anspruch 8, **dadurch gekennzeichnet, dass** eine Recheneinrichtung des Fahrzeugs (1) anhand der detektierten Objektdaten eine Umgebungskarte (8) erstellt, wobei in der Umgebungskarte (8) oder in einer mit der Umgebungskarte (8) verknüpften Datei eine Information über eine räumliche Position einer Tür (2) innerhalb der Umgebung gespeichert wird.

## Claims

1. A system comprised of an unmanned vehicle (1) moving around independently within an environment, in particular a cleaning robot, a controller (7) and a door (2) located in the environment with a doorframe (3) and a door leaf (4), wherein the vehicle (1) has a detector (5) for detecting object data within the environment, wherein the door (2) has an electronic actuator (6) for changing the opening state of the door (2), and wherein the controller (7) is set up to output a control command for activating the actuator (6) as a function of an operating state and/or a position of the vehicle (1), **characterized in that** the door (2) has an identification means (9) with an optical and/or electronic code, and wherein the vehicle (1) has an acquisition means (14) for identifying the door (2), specifically a reader for the optical and/or electronic code of the door (2), and wherein the controller (7) is set up to transmit a control command to the actuator (6) of the identified door (2).

2. The system according to claim 1, **characterized in that** the vehicle (1) has a computer for generating an area map (8) based on the detected object data, wherein the area map (8) or a file linked with the area map (8) has information about a spatial position of a door (2) within the environment.

3. The system according to claim 1 or 2, **characterized in that** the controller (7) is set up to automatically generate a control command once it is detected that a movement route of the vehicle (1) contains a door (2).

4. The system according to one of the preceding claims, **characterized in that** the controller (7) is a central controller (7), in particular a controller (7) of a home automation network.

5. The system according to one of the preceding claims, **characterized in that** the vehicle (1) and/or the controller (7) has a registration device for manually registering a door (2) by a user and/or for automatically registering a door (2).

6. The system according to one of the preceding claims, **characterized in that** the actuator (6) of the door (2) has an electromagnet, a spring mechanism, and/or an electric motor.

7. The system according to one of the preceding claims, **characterized in that** the vehicle (1) and/or the actuator (6) of the door (2) and/or the central controller (7) has a communication module, in particular a radio module.

8. A method for operating a system comprised of an unmanned vehicle (1) moving around independently within an environment, a controller (7) and a door (2) located in the environment with a doorframe (3) and a door leaf (4), wherein a detector (5) of the vehicle (1) records object data within the environment, wherein an acquisition means (14) of the vehicle (1) identifies a door (2), specifically a reader of the vehicle (1) identifies an optical and/or electronic code of an identification means (9) of the door (2), and wherein the controller (7) outputs a control command for activating an electronic actuator (6) of the identified door (2) as a function of an operating state and/or a position of the vehicle (1), wherein the electronic actuator (2) receives the control command and thereupon changes an opening state of the door (2).

9. The method according to claim 8, **characterized in that** a computer of the vehicle (1) generates an area map (8) based on the detected object data, wherein information about a spatial position of the door (2) within the environment is stored in the area map (8) or in a file linked with the area map (8).

## Revendications

1. Système comprenant un véhicule dépourvu de personnes (1), en particulier un robot de nettoyage, qui se déplace automatiquement dans un environnement, un dispositif de commande (7) et une porte (2) située dans l'environnement avec un cadre de porte (3) et un battant de porte (4), dans lequel le véhicule (1) comprend un dispositif de détection (5) pour détecter des données d'objets dans l'environnement, dans lequel la porte (2) a un actionneur électronique (6) pour modifier un état d'ouverture de la porte (2), et dans lequel le dispositif de commande (7) est configuré pour émettre un ordre de commande pour actionner l'actionneur (6) en fonction d'un état de fonctionnement et/ou d'une position du véhicule (1), **caractérisé en ce que** la porte (2) présente un moyen d'identification (9) présentant un code optique et/ou électronique, et dans lequel le véhicule (1) comprend un moyen de détection (14) pour identifier la porte (2), à savoir un dispositif de lecture pour le code optique et/ou électronique de la porte (2), et dans lequel le dispositif de commande (7) est configuré pour transmettre une instruction de commande à l'actionneur (6) de la porte identifiée (2).

2. Système selon la revendication 1, **caractérisé en ce que** le véhicule (1) comprend un dispositif informatique pour établir une carte (8) de l'environnement sur la base des données d'objets détectées, dans lequel la carte (8) de l'environnement ou un fichier lié à la carte (8) de l'environnement contient une information sur la position spatiale d'une porte (2) dans l'environnement.

3. Système selon la revendication 1 ou 2, **caractérisé en ce que** le dispositif de commande (7) est agencé pour générer automatiquement une instruction de commande lorsqu'il est détecté qu'un itinéraire de déplacement du véhicule (1) comprend une porte (2).

4. Système selon l'une des revendications précédentes, **caractérisé en ce que** le dispositif de commande (7) est un dispositif de commande central (7), en particulier un dispositif de commande (7) d'un réseau domotique.

5. Système selon l'une des revendications précédentes, **caractérisé en ce que** le véhicule (1) et/ou le dispositif de commande (7) comprend un dispositif d'enregistrement pour l'enregistrement manuel d'une porte (2) par un utilisateur et/ou pour l'enregistrement automatique d'une porte (2).

6. Système selon l'une des revendications précédentes, **caractérisé en ce que** l'actionneur (6) de la porte (2) comprend un électro-aimant, un mécanisme à ressort et/ou un moteur électrique.

7. Système selon l'une des revendications précédentes, **caractérisé en ce que** le véhicule (1) et/ou l'actionneur (6) de la porte (2) et/ou le dispositif de commande central (7) comportent un module de communication, en particulier un module radio.

8. Procédé pour faire fonctionner un système comprenant un véhicule dépourvu de personnes (1) qui se déplace automatiquement dans un environnement, un dispositif de commande (7) et une porte (2) située dans l'environnement avec un cadre de porte (3) et un battant de porte (4), dans lequel un dispositif de détection (5) du véhicule (1) enregistre des données d'objets dans l'environnement, dans lequel un moyen de détection (14) du véhicule (1) identifie une porte (2), à savoir un dispositif de lecture du véhicule (1) identifie un code optique et/ou électronique d'un moyen d'identification (9) de la porte (2), et dans lequel le dispositif de commande (7) émet une instruction de commande pour actionner un actionneur électronique (6) de la porte identifiée (2) en fonction d'un état de fonctionnement et/ou d'une position du véhicule (1), dans lequel l'actionneur électronique (2) reçoit l'instruction de commande et modifie alors un état d'ouverture de la porte (2).

9. Procédé selon la revendication 8, **caractérisé en ce qu'**un dispositif informatique du véhicule (1) crée une carte (8) de l'environnement sur la base des données d'objets détectées, dans lequel une information concernant une position spatiale d'une porte (2) dans l'environnement est mémorisée dans la carte de l'environnement (8) ou dans un fichier lié à la carte (8) de l'environnement.
